# EUROPÄISCHE PATENTSCHRIFT

(11) **EP 2 978 993 B1**
(45) Veröffentlichungstag und Bekanntmachung des Hinweises auf die Patenterteilung: **07.03.2018**
(21) Anmeldenummer: 14705474.6
(22) Anmeldetag: 31.01.2014
(51) Int. Cl.: F16F 13/20

(54) **LAGER**
BEARING
PALIER

(30) Priorität: 25.03.2013 DE 102013005034; 07.08.2013 DE 102013013092
(43) Veröffentlichungstag der Anmeldung: 03.02.2016
(73) Patentinhaber: Carl Freudenberg KG, 69469 Weinheim (DE)
(72) Erfinder: CORDTS, Detlef, 16348 Wandlitz (DE)
(86) Internationale Anmeldenummer: PCT/EP2014/000258
(87) Internationale Veröffentlichungsnummer: WO 2014/154315

(56) Entgegenhaltungen:
- WO-A1-00/17047
- WO-A1-2009/046712
- DE-A1- 10 329 982
- JP-A- 2012 172 816

## Beschreibung

### Technisches Gebiet

Die Erfindung betrifft ein Lager nach dem Oberbegriff des Patentanspruchs 1.

### Stand der Technik

Aus dem Stand der Technik sind bereits Lager bekannt, welche einen Kern und eine diesen umgebende Hülle umfassen, siehe z.B. WO0017047; DE10329982; WO2009046712 und JP2012172816. Dabei ist der Kern über mindestens ein Elastomer oder mehrere Elastomere gegen die Hülle abgestützt.

Zwischen dem Kern und der Hülle sind eine oder mehrere Funktionskammern angeordnet, in denen Arbeitsfluide aufgenommen sind. Die Funktionskammern sind häufig an ihren axialen Enden durch die Elastomere begrenzt, welche den Kern an die Hülle anbinden.

Solche Lager werden als hydraulische Lager bezeichnet und weisen üblicherweise zwei abgeschlossene und miteinander verbundene Funktionskammern auf, in denen jeweils ein Arbeitsfluid aufgenommen ist.

Sobald ein hydraulisches Lager abgekühlt wird, entfalten unterschiedliche Ausdehnungskoeffizienten des Kerns, der Hülle sowie der Elastomere und des Arbeitsfluids ihre Wirkung.

Das Arbeitsfluid in den Funktionskammern zeigt üblicherweise einen wesentlich höheren Ausdehnungskoeffizienten als die umgebenden, im Wesentlichen harten Begrenzungsmaterialien. Diese Begrenzungsmaterialien sind üblicherweise aus Metall oder Elastomeren gefertigt.

Durch das Abkühlen des Arbeitsfluids entsteht in den Funktionskammern ein Hohlraum, bzw. ein Hohlvolumen, welches ausgeglichen werden muss. Die Bildung dieses Hohlvolumens führt zu einer Druckabsenkung im gesamten Lagersystem.

Sofern Restluft in den Funktionskammern nach deren Füllen vorhanden ist, wird diese durch den sinkenden Druck ausgedehnt und sorgt für einen entsprechenden Volumenausgleich.

Je mehr Restluft in den Funktionskammern aufgenommen ist, desto geringer ist der Druckabfall im Lager. Eine entstehende Luftblase ist aber immer im Wesentlichen so groß, wie der Volumenschwund des Arbeitsfluids.

Vor diesem Hintergrund sei angemerkt, dass der Druck in den Funktionskammern unter den Dampfdruck des Arbeitsfluids sinkt, sofern keine Restluft in den Funktionskammern enthalten ist. Das Arbeitsfluid verdampft und füllt die entstandene Kavität bzw. das entstandene Hohlvolumen, der Systemdruck entspricht dann dem Dampfdruck des Arbeitsfluids.

Das zuvor beschriebene Verhalten nimmt an Komplexität zu, wenn sehr unterschiedliche Mengen an Luft in den beiden Funktionskammern aufgenommen sind. Hierdurch ergeben sich asymmetrische Steifigkeitsverläufe.

In jedem Fall muss bei einer Auslenkung des Kerns relativ zur Hülle, unabhängig von der Frequenz bzw. Geschwindigkeit der Auslenkung, zunächst ein entstandenes Hohlvolumen ausgeglichen werden, bevor ein signifikanter Druckanstieg in der Funktionskammer auftritt. Das Lager hat bis zu diesem Punkt nur die geringe Tragfedersteifigkeit, erst danach beginnt die höhere Blähfedersteifigkeit zu wirken.

### Darstellung der Erfindung

Der Erfindung liegt daher die Aufgabe zugrunde, ein Lager der eingangs genannten Art derart auszugestalten und weiter zu bilden, dass ein Steifigkeitseinbruch des Lagers bei niedrigen Temperaturen möglichst gering ausfällt. Das Dokument WO 00/17047 zeigt den Oberbegriff des Patentanspruchs 1. Die vorliegende Erfindung löst die zuvor genannte Aufgabe durch die Merkmale des Patentanspruchs 1.

Erfindungsgemäß ist erkannt worden, dass ein Steifigkeitseinbruch bei niedrigen Temperaturen vermieden werden kann, indem das durch unterschiedliche Ausdehnungskoeffizienten auftretende Hohlvolumen durch ein Ausgleichsfluid ersetzt wird.

Erfindungsgemäß ist konkret erkannt worden, dass dieses Ausgleichsfluid außerhalb der eigentlichen Funktionskammern gelagert werden muss. Durch die Zuführung des Ausgleichsfluids, um Hohlvolumina auszufüllen, kann verhindert werden, dass die Funktion der hydraulischen Versteifung bei hohen Frequenzen und/oder Geschwindigkeiten verloren geht.

Erfindungsgemäß ist insbesondere erkannt worden, dass fertigungstechnisch stets eine gewisse Restluftmenge in den Funktionskammern verbleibt. Dabei ist erfindungsgemäß sichergestellt, dass der Druck innerhalb des Lagers nur um ein geringes Maß abfällt. Anderenfalls würde eine sich ausdehnende Restluftmenge zu Funktionseinschränkungen führen.

Erfindungsgemäß wird all diesen Problemen durch eine Ausgleichskammer für ein Ausgleichsfluid begegnet, aus welcher das Ausgleichsfluid in eine Funktionskammer einleitbar ist. Dabei ist das Ausgleichsfluid in der Ausgleichskammer durch ein bewegliches oder elastisches Trennelement von einem gasgefüllten Raum getrennt. Durch das bewegliche oder elastische Trennelement ist die Menge des zugeführten Ausgleichsfluids problemlos dosierbar.

Insoweit ist ein Lager derart ausgestaltet, dass ein Steifigkeitseinbruch des Lagers bei niedrigen Temperaturen möglichst gering ausfällt.

Folglich ist die eingangs genannte Aufgabe gelöst.

Die Ausgleichskammer könnte durch einen Kanal und ein Rückschlagventil mit einem Verbindungskanal der Funktionskammern fluidleitend verbindbar sein. Für die Funktionsfähigkeit des Lagers muss der Druck in der Ausgleichskammer so hoch sein, wie der statische Systemdruck, der sich im Stillstand des Lagers zwischen den Funktionskammern und dem Ausgleichsvolumen einstellt. Aus den Druckverläufen in den Funktionskammern bei dynamischer Belastung des Lagers lässt sich ermitteln, dass sich dieser statische Systemdruck als Minimalwert des Druckverlaufes in der Mitte des Verbindungskanals ergibt. Wird das Ausgleichsvolumen über ein Rückschlagventil derart mit der Mitte des Verbindungskanals verbunden, dass ein evtl. vorhandener Überdruck im Ausgleichsvolumen über dieses Rückschlagventil abgebaut wird, wenn das Druckminimum in der Mitte des Verbindungskanals erreicht wird, stellt sich im Ausgleichsvolumen besagter statischer Systemdruck des dynamisch nicht belasteten Lagers automatisch und ohne äußeren Eingriff ein.

Die Ausgleichskammer könnte durch einen dünnen Kanal mit dem Verbindungskanal fluidleitend verbindbar sein. Ein steigender statischer Systemdruck in den Funktionskammern, z.B. durch Erwärmung des Lagers, kann über einen zusätzlichen Kanal zwischen dem Ausgleichsvolumen und dem Verbindungskanal oder einer der Funktionskammern ausgeglichen werden. Durch den Kanal, der sehr dünn ausgebildet ist, kann sehr dosiert bei jeder Druckspitze im Kanal oder in einer der Funktionskammern immer nur eine sehr geringe Menge an Fluid dem Ausgleichsvolumen zugeführt werden.

Das Rückschlagventil könnte einen geringen Rückfluss in die Ausgleichskammer zulassen. Alternativ zu einem zusätzlichen dünnen Kanal kann auch das Rückschlagventil so ausgelegt werden, dass es bei Druckspitzen im Verbindungskanal einen sehr geringen Rückfluss in das Ausgleichsvolumen ermöglicht.

Innerhalb des Kanals könnte eine Strömungsdrossel oder ein Filter angeordnet sein. Innerhalb des Kanals könnte eine Strömungsdrossel angeordnet sein. Vorzugsweise ist der Kanal so bemessen, dass bei funktionsrelevanten Frequenzen oder Geschwindigkeiten mit den im Lager herrschenden Drücken praktisch kein Volumenstrom zustande kommt und die volle dynamische Steifigkeit des Lagers zur Verfügung steht. Trotzdem soll der Kanal derart dimensioniert sein, dass ein Volumenausgleich bei Temperaturänderungen des gesamten Lagers, welcher sich über Minuten oder Stunden hinziehen kann, gewährleistet ist.

Vor diesem Hintergrund könnte die Strömungsdrossel ein Vlies oder Gewebe aufweisen, welches zwischen zwei mit Durchgängen versehenen Scheiben sandwichartig aufgenommen ist. Hierdurch kann der Gefahr begegnet werden, dass Partikeln, die im Ausgleichsfluid schweben, den Kanal oder das Rückschlagventil zusetzen. Des Weiteren kann durch ein Gewebe oder Vlies ein Strömungswiderstand innerhalb des Kanals eingestellt werden.

Der Strömungswiderstand kann durch eine Lage eines festen und dicht gepackten Vlieses oder Gewebes eingestellt werden. Das Vlies oder Gewebe wird gegen auftretende Druckunterschiede durch Scheiben mit Durchgängen gegen ein Verkippen oder gegen eine Auslenkung abgestützt.

Der gasgefüllte Raum wird vorteilhaft so groß gewählt, dass ein Volumenausgleich ohne wesentlichen Druckabfall erfolgt. Die Größe des gasgefüllten Raums ist abhängig von der Restluftmenge in den Funktionskammern nach deren Befüllung, dem zu erwartenden Temperaturbereich, innerhalb dessen ausgeglichen werden muss, und einer zulässigen Abweichung von einer Kennlinie des Lagers. Vorzugsweise zeigt der gasgefüllte Raum etwa das Ein- bis Dreifache des Volumens, welches beim Abkühlen ausgeglichen werden muss.

Das Trennelement könnte als beweglicher Kolben ausgestaltet sein. Die Trennung zwischen den Funktionskammern und Teilen der Ausgleichskammer muss gasdicht sein. Anderenfalls könnten unerwünschte Gase in die Funktionskammern gelangen. Vorzugsweise wird daher ein abgedichteter und axial beweglicher Kolben eingesetzt.

Vor diesem Hintergrund ist auch denkbar, dass das Trennelement als Rollmembran ausgestaltet ist. Eine Rollmembran aus Elastomer, welche vorzugsweise mit einer Gewebeverstärkung versehen ist, zeichnet sich durch eine hohe Elastizität aus. Überdies ist eine Rollmembran aus einem Elastomer sehr leicht derart innerhalb eines Kanals verklemmbar, dass keine undichten Stellen entstehen.

Das Trennelement könnte als Zellgummi ausgestaltet sein. Hierbei ist das Ausgleichsfluid von vielen abgeschlossenen, gasgefüllten Räumen, nämlich Blasen oder Zellen, abgetrennt, die in einer Gummimatrix eingebettet sind. Das Zellgummi bildet eine Knautschzone für eine bewegliche Ausgleichsfluidsäule.

Auch Temperaturerhöhungen können erhebliche Auswirkungen auf die Eigenschaften eines Lagers haben. Durch eine Erwärmung des Arbeitsfluids können zusätzliche Volumina auftreten.

Diese zusätzlichen Volumina führen zu einer Komprimierung der in den Funktionskammern üblicherweise aufgenommenen Restluft und zu einer Ausbeulung der Elastomere, welche den Kern gegen die Hülle abstützen.

Hierdurch steigt der Druck im Lager bzw. in einem System, welches ein solches Lager aufweist. Durch eine Ausgleichskammer, in welcher ein Ausgleichsfluid vorgesehen ist, wobei das Ausgleichsfluid in der Ausgleichskammer durch ein bewegliches oder elastisches Trennelement von einem gasgefüllten Raum getrennt ist, können zusätzliche, durch Erwärmung entstehende Volumina kompensiert werden.

Der durch die zusätzlichen Volumina entstehende zusätzliche Druck fördert Arbeitsfluid in die Ausgleichskammer hinein, wobei das Gas im gasgefüllten Raum komprimiert wird. Der Druckanstieg im Lager fällt daher wesentlich geringer aus. Das Arbeitsfluid und das Ausgleichsfluid sind vorzugsweise materialidentisch.

### Kurzbeschreibung der Zeichnung

In der Zeichnung zeigen
- Fig. 1: ein Lager, welches eine Ausgleichskammer mit einem gasgefüllten Raum aufweist, wobei ein dünner Kanal in einem weiteren Kanal endet,
- Fig. 2: ein Lager, welches eine Ausgleichskammer mit einem gasgefüllten Raum aufweist, wobei ein dünner Kanal in einer Funktionskammer endet,
- Fig. 3: ein Lager, welches eine Ausgleichskammer mit einem gasgefüllten Raum aufweist, wobei eine Trennung von Fluid und Gas durch einen Trennkolben erfolgt,
- Fig. 4: ein Lager, welches eine Ausgleichskammer mit einem gasgefüllten Raum aufweist und welches mit einem Ventil zur Befüllung/Steuerung des Drucks im gasgefüllten Raum der Ausgleichskammer ausgestattet ist,
- Fig. 5: ein Lager, welches eine Ausgleichskammer mit einem gasgefüllten Raum aufweist und welches mit einem zusätzlichen großen externen Speicher ausgestattet ist, um das Volumen des gasgefüllten Raums zu erhöhen,
- Fig. 6: ein Lager, in welchem ganz allgemein ein abgegrenzter, gasgefüllter Raum dargestellt ist,

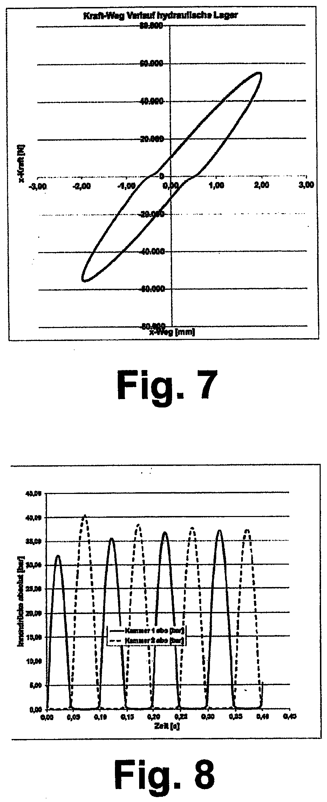

- Fig. 7: ein Diagramm, welches den Kraft-Weg-Verlauf eines Lagers mit geringen Mengen an Restluft bei Raumtemperatur zeigt,
- Fig. 8: ein Diagramm, welches den Verlauf der Drücke in den Funktionskammern darstellt, wobei ein Verlauf bei Raumtemperatur, unbelastet 1 bar absolut, bei 2 mm Amplitude dargestellt ist,

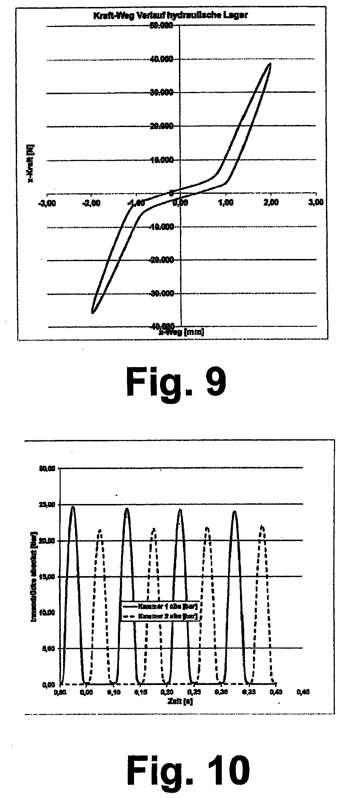

- Fig. 9: ein Diagramm, welches den Kraft-Weg-Verlauf eines Lagers mit geringen Mengen an Restluft in den Funktionskammern bei minus 20 °C zeigt,
- Fig. 10: ein Diagramm, welches den Verlauf der Drücke in den Funktionskammern bei minus 20 °C, unbelastet 1 bar absolut, bei 2 mm Amplitude zeigt,

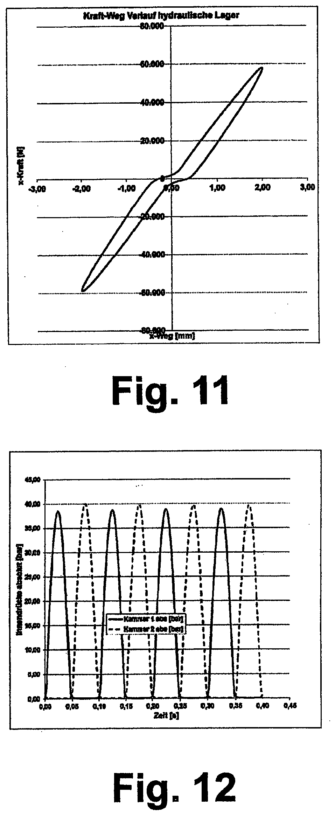

- Fig. 11: ein Diagramm, welches den Kraft-Weg-Verlauf eines Lagers mit Ausgleichskammer bei minus 20 °C darstellt, wobei das Ausgleichsvolumen etwa den doppelten Temperaturschwund ausgleicht,
- Fig. 12: ein Diagramm, welches den Verlauf der Drücke in den Funktionskammern bei minus 20 °C darstellt, wobei ein Ausgleichsvolumen der Ausgleichskammer etwa den doppelten Temperaturschwund kompensieren kann, und
- Fig. 13: ein Lager, bei dem die Ausgleichskammer mit einem Zellgummi ausgestaltet ist.

### Ausführung der Erfindung

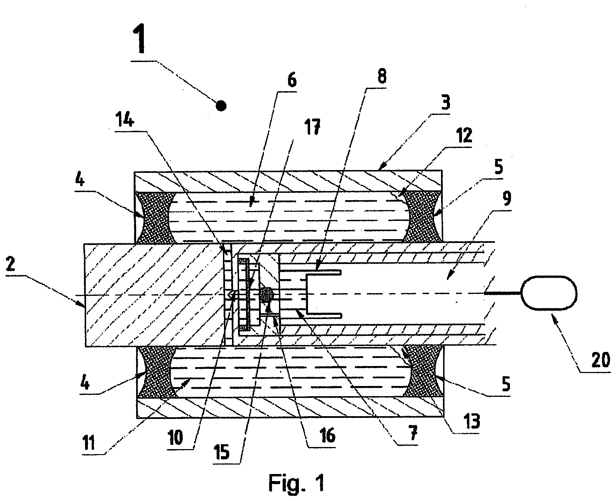

Fig. 1 zeigt ein Lager 1, umfassend einen Kern 2 und eine diesen umgebende Hülle 3 wobei der Kern 2 über mindestens ein Elastomer 4, 5 oder mehrere Elastomere 4, 5 gegen die Hülle 3 abgestützt ist, wobei zwischen Kern 2 und Hülle 3 mindestens zwei ein Arbeitsfluid enthaltende Funktionskammern 6 und 11 ausgebildet sind und wobei die Funktionskammern 6 und 11 zumindest teilweise durch das oder die Elastomere 4, 5 begrenzt sind. Die mindestens zwei Funktionskammern 6 und 11 sind durch einen Verbindungskanal 14 fluidleitend verbunden.

Es ist mindestens eine Ausgleichskammer 7 für ein Ausgleichsfluid vorgesehen, aus welcher das Ausgleichsfluid in die Funktionskammern 6 und 11 einleitbar ist, wobei das Ausgleichsfluid in der Ausgleichskammer 7 durch ein bewegliches oder elastisches Trennelement 8 von einem gasgefüllten Raum 9 getrennt ist.

Die Ausgleichskammer 7 ist durch einen Kanal 10 mit einem Verbindungskanal 14 der beiden Funktionskammern 6, 11 fluidleitend verbunden. Innerhalb des Kanals 10 ist ein Rückschlagventil 15 angeordnet.

Innerhalb des Kanals 10 ist eine Strömungsdrossel 17 angeordnet. Die Strömungsdrossel 17 könnte ein Vlies oder Gewebe aufweisen, welches zwischen mit Durchgängen versehenen Scheiben sandwichartig aufgenommen ist.

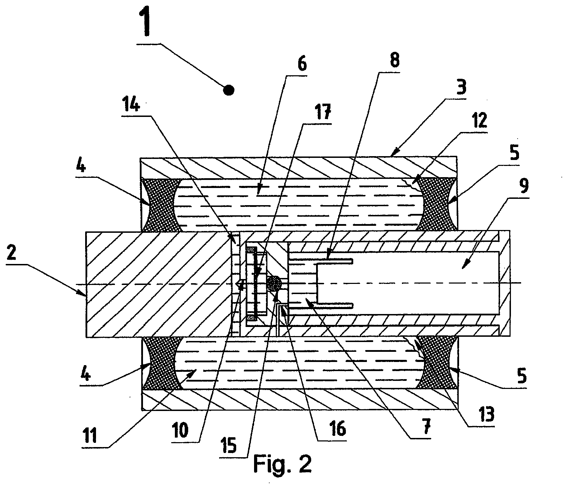

Zusätzlich ist die Ausgleichskammer 7 mit einem sehr dünnen Kanal 16 fluidleitend mit dem Kanal 10 und/ oder dem Verbindungskanal 14 und/ oder einer oder mehreren Funktionskammern 6, 11, wie in Fig. 2 dargestellt, fluidleitend verbunden.

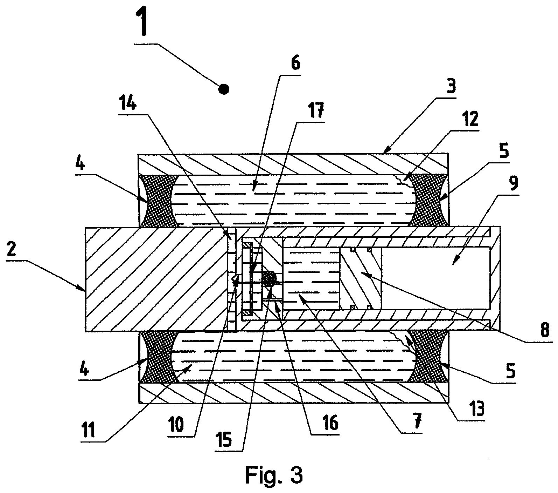

Fig. 3 zeigt, dass das Trennelement 8 als beweglicher Kolben ausgestaltet ist. Das Trennelement 8 könnte auch als Rollmembran ausgestaltet sein.

In den konkret dargestellten Ausführungsbeispielen des Lagers 1 sind zwei Funktionskammern 6, 11 vorgesehen, welche beide mit Arbeitsfluid befüllt sind. In den Funktionskammern 6, 11 sind Restluftmengen 12, 13 aufgenommen, welche beim Befüllen der Funktionskammern 6, 11 mit Arbeitsfluid entstehen.

Bei Belastung der Funktionskammern 6, 11 durch eine Bewegung in x-Richtung wird in der Funktionskammer 6 der Druck erhöht, in der Funktionskammer 11 der Druck abgesenkt. Dabei wirken beide Druckänderungen gleichsinnig als Gegenkraft zur Bewegungsrichtung x.

Der Druck in der Funktionskammer 6 kann theoretisch beliebig hoch ansteigen, in der Funktionskammer 11 jedoch grundsätzlich nicht unter den Dampfdruck des Arbeitsfluides fallen. Durch hohe Vordrücke im Lagersystem kann die Gesamtsteifigkeit angehoben werden.

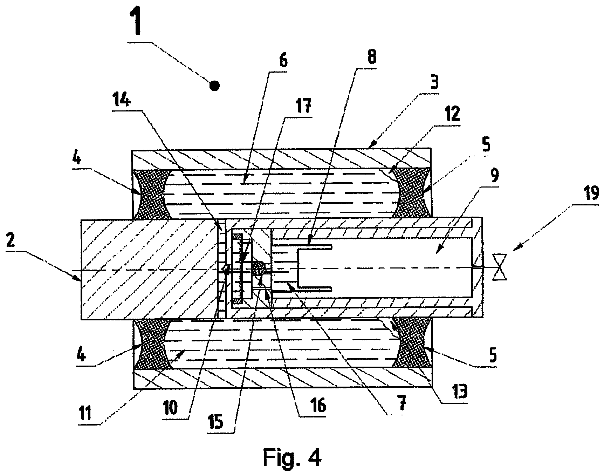

Hierdurch ist es möglich, die dynamische Steifigkeit des Lagers 1 aktiv oder passiv durch die Regelung des Drucks über ein in Fig. 4 gezeigtes Ventil 19 im gasgefüllten Raum 9 zu steuern.

Vor diesem Hintergrund sind viele passive Regelungen für einen Temperaturausgleich denkbar. Es könnte eine Bi-Metall-Feder verwendet werden, die auf einen Druckspeicher wirkt. Es könnten Ausdehnungskörper zur Kompensation von Volumenänderungen verwendet werden. Diese Ausdehnungskörper müssten negative Ausdehnungskoeffizienten zeigen.

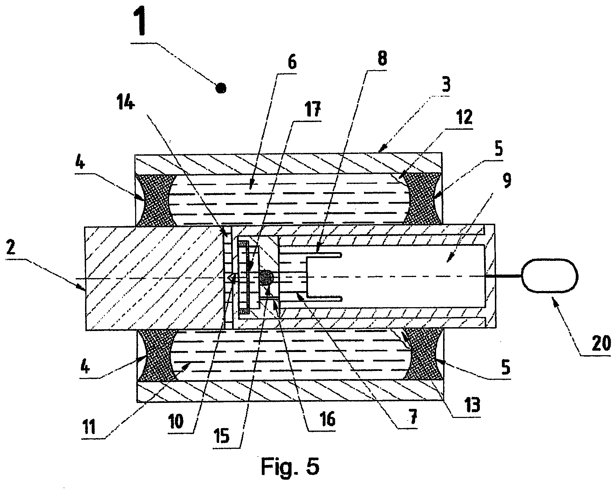

In Fig. 5 ist ein Speicher 20 vorgesehen, der angezapft und regelmäßig aufgefüllt wird. Dies könnte eventuell durch dynamische Vorgänge im Lagersystem selbst erfolgen. Es könnte eine Drucksenkung erfolgen. Es könnte ein Überdruckventil zum Speicher hin geöffnet werden, um den Druck erneut anzuheben. Bei einer Druckerhöhung könnte ein Überdruckventil zu einem weiteren Speicher, insbesondere zur Umgebung, vorgesehen sein, welches Druck ablässt.

Bei einer rein passiven Ausgestaltung könnte ein sehr großer Speicher mit einem sehr großen Volumen für einen nahezu konstanten Druck sorgen. Bei geeigneter Auslegung des Volumens des großen Speichers relativ zu den Differenzvolumina in den Funktionskammern kann eine Druckabsenkung gerade die Versteifung der Elastomere bei Temperaturabsenkung ausgleichen. Ebenso ist eine Kompensation der Modulabnahme des Elastomers bei Temperaturerhöhung denkbar.

Das Lager könnte als hydraulisches Lager, insbesondere als hydraulisches Achslenkerlager, verwendet werden. Das Lager könnte in Schienenfahrzeugen als hydraulisches Achslenkerlager verwendet werden.

Es ist überdies möglich, Hydrolager mit einem bestimmten Vordruck auszustatten, um eine Kennlinie zu beeinflussen, ohne die Temperaturanfälligkeit zu erhöhen.

Eine Restluftmenge in einer Funktionskammer kann gezielt dramatisch erhöht werden. So kann der parasitäre Effekt der Restluftmengen als Mittel zur Kennliniengestaltung genutzt werden.

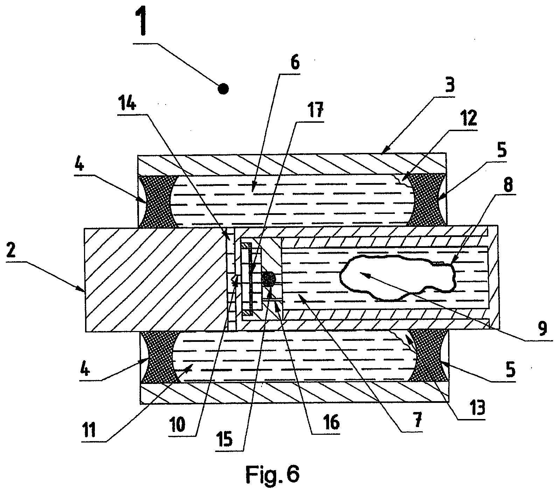

Fig. 6 zeigt ein Lager 1 bei welchem der gasgefüllte Raum 9 ganz allgemein abgegrenzt ist. Dies kann durch einen Faltenbalg, eine elastische Blase oder ähnliches realisiert sein.

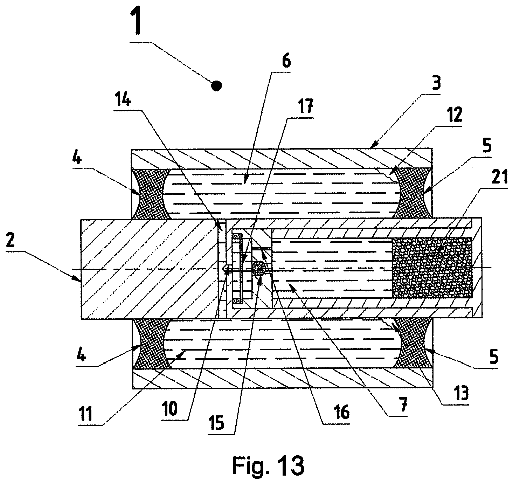

Fig. 13 zeigt ein Lager 1, umfassend einen Kern 2 und eine diesen umgebende Hülle 3 wobei der Kern 2 über mindestens ein Elastomer 4, 5 oder mehrere Elastomere 4, 5 gegen die Hülle 3 abgestützt ist, wobei zwischen Kern 2 und Hülle 3 mindestens zwei ein Arbeitsfluid enthaltende Funktionskammern 6 und 11 ausgebildet sind und wobei die Funktionskammern 6 und 11 zumindest teilweise durch das oder die Elastomere 4, 5 begrenzt sind. Die mindestens zwei Funktionskammern 6 und 11 sind durch einen Verbindungskanal 14 fluidleitend verbunden.

Es ist mindestens eine Ausgleichskammer 7 für ein Ausgleichsfluid vorgesehen, aus welcher das Ausgleichsfluid in die Funktionskammern (6, 11) einleitbar ist, wobei das Ausgleichsfluid in der Ausgleichskammer 7 durch ein elastisches Trennelement 21 von mehreren gasgefüllten Räumen getrennt ist.

Konkret ist das Trennelement 21 als Zellgummi ausgestaltet. Hier ist das Ausgleichsfluid von vielen abgeschlossenen, gasgefüllten Räumen, nämlich Blasen oder Zellen, abgetrennt, die in einer Gummimatrix eingebettet sind.

## Patentansprüche

1. Lager (1), umfassend einen Kern (2) und eine diesen umgebende Hülle (3), wobei der Kern (2) über mindestens ein Elastomer (4, 5) oder mehrere Elastomere (4, 5) gegen die Hülle (3) abgestützt ist, wobei zwischen Kern (2) und Hülle (3) mindestens zwei ein Arbeitsfluid enthaltende Funktionskammern (6, 11) ausgebildet sind und wobei die Funktionskammern (6, 11) zumindest teilweise durch das oder die Elastomere (4, 5) begrenzt sind, wobei mindestens eine Ausgleichskammer (7) für ein Ausgleichsfluid vorgesehen ist, aus welcher das Ausgleichsfluid in die Funktionskammern (6, 11) einleitbar ist, wobei das Ausgleichsfluid in der Ausgleichskammer (7) durch ein bewegliches oder elastisches Trennelement (8, 21) von einem gasgefüllten Raum (9) oder mehreren gasgefüllten Räumen getrennt ist, **dadurch gekennzeichnet, dass** die Ausgleichskammer (7) durch einen Kanal (10) und ein Rückschlagventil (15) mit einem Verbindungskanal (14) der Funktionskammern (6, 11) fluidleitend verbindbar ist.

2. Lager nach Anspruch 1, **dadurch gekennzeichnet, dass** die Ausgleichskammer (7) durch einen dünnen Kanal (16) mit dem Verbindungskanal (14) fluidleitend verbindbar ist.

3. Lager nach Anspruch 1 oder 2, **dadurch gekennzeichnet, dass** das Rückschlagventil (15) einen geringen Rückfluss in die Ausgleichskammer (7) zulässt.

4. Lager nach einem der Ansprüche 1 bis 3, **dadurch gekennzeichnet, dass** innerhalb des Kanals (10) eine Strömungsdrossel (17) oder ein Filter angeordnet ist.

5. Lager nach Anspruch 4, **dadurch gekennzeichnet, dass** die Strömungsdrossel (17) ein Vlies oder Gewebe aufweist, welches zwischen mit Durchgängen versehenen Scheiben sandwichartig aufgenommen ist.

6. Lager nach einem der Ansprüche 1 bis 5, **dadurch gekennzeichnet, dass** das Trennelement (8) als beweglicher Kolben ausgestaltet ist.

7. Lager nach einem der Ansprüche 1 bis 5, **dadurch gekennzeichnet, dass** das Trennelement (8) als Rollmembran ausgestaltet ist.

8. Lager nach einem der Ansprüche 1 bis 5, **dadurch gekennzeichnet, dass** das Trennelement (21) als Zellgummi ausgestaltet ist.

## Claims

1. Bearing (1), comprising a core (2) and a sheath (3) surrounding said core (2), wherein the core (2) by way of at least one elastomer (4, 5) or a plurality of elastomers (4, 5) is supported in relation to the sheath (3), wherein at least two functional chambers (6, 11) which contain an operating fluid are configured between the core (2) and the sheath (3), and wherein the functional chambers (6, 11) are at least partially delimited by the elastomer or elastomers (4, 5), wherein at least one equalization chamber (7) for an equalization fluid is provided, from which equalization chamber (7) the equalization fluid is introducible into the functional chambers (6, 11), wherein the equalization fluid in the equalization chamber (7) is separated by a movable or elastic separation element (8, 21) from a gas-filled space (9) or a plurality of gas-filled spaces, **characterized in that** the equalization chamber (7) is connectable in a fluid-conducting manner to a connection duct (14) of the functional chambers (6, 11) via a duct (10) and a check valve (15).

2. Bearing according to Claim 1, **characterized in that** the equalization chamber (7) is connectable in a fluid-conducting manner to the connection duct (14) via a thin duct (16).

3. Bearing according to Claim 1 or 2, **characterized in that** the check valve (15) allows a modest reflux into the equalization chamber (7).

4. Bearing according to one of Claims 1 to 3, **characterized in that** a flow throttle (17) or a filter is disposed within the duct (10).

5. Bearing according to Claim 4, **characterized in that** the flow throttle (17) has a non-woven or woven fabric which is sandwiched between disks which are provided with passages.

6. Bearing according to one of Claims 1 to 5, **characterized in that** the separation element (8) is designed as a displaceable piston.

7. Bearing according to one of Claims 1 to 5, **characterized in that** the separation element (8) is designed as a roller diaphragm.

8. Bearing according to one of Claims 1 to 5, **characterized in that** the separation element (21) is designed as a foam rubber.

## Revendications

1. Palier (1), comprenant un noyau (2) et une enveloppe (3) enveloppant celui-ci, le noyau (2) étant supporté par le biais d'au moins un élastomère (4, 5) ou par plusieurs élastomères (4, 5) contre l'enveloppe (3), au moins deux chambres fonctionnelles (6, 11) contenant un fluide de travail étant réalisées entre le noyau (2) et l'enveloppe (3), et les chambres fonctionnelles (6, 11) étant limitées au moins en partie par le ou les élastomères (4, 5), au moins une chambre d'équilibrage (7) pour un fluide d'équilibrage étant prévue, depuis laquelle le fluide d'équilibrage peut être introduit dans les chambres fonctionnelles (6, 11), le fluide d'équilibrage dans la chambre d'équilibrage (7) étant séparé par un élément de séparation mobile ou élastique (8, 21) d'un espace rempli de gaz (9) ou de plusieurs espaces remplis de gaz, **caractérisé en ce que** la chambre d'équilibrage (7) peut être reliée de manière fluidique par un canal (10) et un clapet antiretour (15) à un canal de liaison (14) des chambres fonctionnelles (6, 11).

2. Palier selon la revendication 1, **caractérisé en ce que** la chambre d'équilibrage (7) peut être reliée de manière fluidique par un canal mince (16) au canal de liaison (14).

3. Palier selon la revendication 1 ou 2, **caractérisé en ce que** le clapet antiretour (15) permet un léger reflux dans la chambre d'équilibrage (7).

4. Palier selon l'une quelconque des revendications 1 à 3, **caractérisé en ce qu'**à l'intérieur du canal (10) est disposé un étranglement d'écoulement (17) ou un filtre.

5. Palier selon la revendication 4, **caractérisé en ce que** l'étranglement d'écoulement (17) présente un non tissé ou un tissu qui est reçu en sandwich entre des disques pourvus de passages.

6. Palier selon l'une quelconque des revendications 1 à 5, **caractérisé en ce que** l'élément de séparation (8) est configuré sous forme de piston mobile.

7. Palier selon l'une quelconque des revendications 1 à 5, **caractérisé en ce que** l'élément de séparation (8) est configuré sous forme de membrane de roulement.

8. Palier selon l'une quelconque des revendications 1 à 5, **caractérisé en ce que** l'élément de séparation (21) est configuré sous forme de caoutchouc cellulaire.
